Europäisches Patentamt

European Patent Office

Office européen des brevets

(19)

(11) Publication number: **0 075 058**
**A1**

# EUROPEAN PATENT APPLICATION

(12)

(21) Application number: **81830159.0**

(22) Date of filing: **15.09.81**

(51) Int. Cl.³: **A 23 L 1/176**

(43) Date of publication of application: **30.03.83**
**Bulletin 83/13**

(84) Designated Contracting States: **AT BE CH DE FR GB IT LI LU NL SE**

(71) Applicant: **EXPORT TRADING s.r.l., I-43029 Traversetolo Guardasone (Parma) (IT)**

(72) Inventor: **Ettore, Santi, Viale Gozzadini, 5, I-40100 Bologna (IT)**

(54) **Alimentary product for preparing meats ready for cooking.**

(57) The initially moistened meat is directly breaded with a granular compound employing: meal, eggs, salt, grated bread and natural flavours.

For manufacturing: the compounds supplied by servers arrive on the line to a mixer amalgamating the product and putting it into a kneading machine and subsequently into a drying chamber. A compound is resulting prepared for prompt employ and for a long preservation.

EP 0 075 058 A1

- 1 -

"Alimentary product for preparing meats ready for cooking".

The invention refers to a granular compound to be manufactured for a long preservation, which substantially allows the prompt employ for directly breading meat in general previously moistened with water, making it ready for cooking. The meat breading, by means of conglobing it in a layer envelop, permits to preserve its natural features and to add the flavour of the enveloping paste to its own one.

At present, the user must separately prepare the mixture for dipping, which gives relish to the paste and acts as a conglobating means, and the breaded product allows the moist layer envelope. For this purpose, the mixture is at present prepared with eggs, cheese, salt, natural flavours, with addition of fresh vegetables, if required, or dried or dishydrated ones. These components are subsequently poured into a container, mixed up and amalgamated. The breading product consists of meal or chipped bread. The meat is then completely submerged into the mixture and passed into the breading product.

The foods thus obtained are then fried in oil, either animal or vegetal butter or derivates. The invention avoids the preparation of the compounds for the paste (dipping mixture and breading product), as well as the breading according to different operation phases, the employ of the base compounds for the paste as used at present remaining still the same, which condition ensures the genuineness of the product. This is allowed by the circumstance that a granular product is used prepared with both the dipping and the breading mixtures allowing a prompt employ and a long preservation in store. The base composition employs: soft wheat meal, hen eggs, salt, chipped bread and natural flavours. The base manufacturing process foresees the separate input by means of servers of the base components in the manufacturing line, which lets them into a mixer.

The mixture can be differently carried out according to well known proceedings with hot water or at the room temperature, or by introducing water steam. In this way, the product amalgam is obtained. The paste thus obtained is passed through a kneading machine letting the still moist but already made product formed into grains.

At the cycle end, the compound is passed into a drying chamber enabling its stabilization and drying, bringing it to a humidity content from 10% to 12%. This permits a preservability in store for a long time similarly to that of the dry pastes. The product allows employ particularities for: home use, concern tables, overfrozen food manufactures and retail shops for meat and derivates.

For the prompt employ, after having opened the packing, the user pours the product required by him into a container; he then moistens the meat with water and passes it into the compound. The water brought by the meat acts as a conglobating means of the compound and brings it from the granular state to the moist and doughy one of the type similar to that of the usual paste. The readiness of employ is possible thanks

0075058

,to the high hygroscopicity feature of the compound, which ,

changes its physical state by absorbing water.

The components may vary and be properly integrated with others in order to permit different flavours.Other manufacturing systems may be employed to permit to get otherwise
the anhydrous product.Packing may be performed similarly
according to the known means and forms.

- 1 -                        0075058

CLAIMS:

1)Alimentary product for meat breading as cooking preparation, characterized by the fact that it permits to replace the paste preparation for breading as used at present as well as the relevant operation phases with a granular compound with a high hygroscopic action, apt to be packed for a long preservation and permitting a prompt employ. As base components are used: soft wheat meal, hen eggs,salt, grated bread and natural flavours. The manufacturing proceeding foresees the inlet from servers of the components which, on the line, reach a mixer amalgamating the product; then it passes to a kneading machine and subsequently to a drying device. After having opened the packing, the user pours the required product into a container, moistens the meat with water and lets it pass into the compound. The contact with the meat moist wall transforms the compound from the anhydrous state into the humid doughy one, bringing it to adhere as a layer on the meat.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-2 623 825 (D.TRESSLER) *Example I; column 1, lines 26-32; column 1, lines 1-3* | 1 | A 23 L 1/176 |
| Y | US-A-4 208 442 (D.EVANS et al.) *Claims 1,4,8,16,17,23,24; column 3, line 8; column 4, lines 38-46* | 1 | |
| Y | DE-A-2 308 412 (F.HELMUT) *Claim 1; page 3, paragraph 2; page 4, paragraphs 2 and 3* | 1 | |

TECHNICAL FIELDS SEARCHED (Int. Cl. ³)

A 23 L 1/00
A 23 B 4/00
A 23 P 1/00

The present search report has been drawn up for all claims

| Place of search THE HAGUE | Date of completion of the search 28-04-1982 | Examiner DESMEDT G.R.A. |
|---|---|---|